# EUROPEAN PATENT APPLICATION

(11) **EP 4 481 625 A1**
(43) Date of publication of application: **25.12.2024**
(21) Application number: 23181230.6
(22) Date of filing: 23.06.2023
(51) Int. Cl.: G06N 3/0442, G06N 3/0475, G06N 3/045, G06N 3/088, G06N 3/09

(54) **ARTIFICIAL INTELLIGENCE SYSTEM AND COMPUTER-IMPLEMENTED METHOD FOR GENERATING REALISTIC SYNTHETIC TCP/IP NETWORK TRAFFIC DATA**

(71) Applicant: INESC TEC - Instituto de Engenharia de Sistemas e Computadores, Tecnologia e Ciência, 4200-465 Porto (PT)
(72) Inventor: Sousa, Catarina, 4200-465 Porto (PT); Fontes, Helder, 4200-465 Porto (PT); Oliveira, Hélder, 4200-465 Porto (PT); Loureiro, João, 4200-465 Porto (PT); Campos, Rui, 4200-465 Porto (PT)
(74) Representative: Couto, Cláudia

(57) **Abstract**

An artificial intelligence system for generating realistic synthetic TCP/IP network traffic data, comprising:
- a preprocessing module (110) for receiving a real TCP/IP network traffic trace (102) including sequential real TCP/IP network traffic packets (104) and obtaining input time series data (112) comprising input variables (114) corresponding to different fields (106) of the real TCP/IP network traffic packets (104); and
- a Generative Adversarial Network, GAN, including a GAN generator (120) and a GAN discriminator (210), the GAN generator (120) configured to receive the input variables (114) and generate a predicted subsequent TCP/IP network traffic packets (174).
The GAN generator (120) comprises a Temporal Convolutional Network, TCN (130), for each input variable (114); a stacked LSTM network (140) comprising several LSTM layers (142) and configured to receive a combined representation of the outputs of the individual TCNs (130) to capture correlations between the input variables; a flatten layer (150); a dense layer (160); and a reshape layer (170) for outputting the predicted subsequent TCP/IP network traffic packets (174) at a predetermined dimensionality.

## Description

### FIELD

The present invention is comprised in the field of systems and methods for generating realistic synthetic TCP/IP network traffic data. The TCP/IP protocol suite encompasses all internet packets, and in the present disclosure TCP/IP network traffic data refers to the entire range of packets exchanged within the Internet, including the following internet protocols: TCP, UDP, IP, ICMP and ARP. Therefore, TCP/IP network traffic data includes packets belonging to different protocols that operate at various layers of the TCP/IP model.

### BACKGROUND

Over the last decade, due to significant advances in technology, the impact of computer networks on everyday operations has grown significantly. Consequently, so did the demands put on these modern networks to achieve better values for throughput and capacity. As a result, demand for computer network research has drastically increased, as the evolution of existing network infrastructures and protocols is essential to overcome new adherent challenges of modern networks.

In order to develop these solutions for next-generation networks, researchers need to evaluate the performance of different algorithms in realistic scenarios. The often-preferred approach is experimental testbeds, where all environment's characteristics are considered. However, this approach presents some limitations, requiring the development of traffic generation techniques.

In this context, it is necessary to develop an algorithm based on network traffic generation that allows the creation of realistic network-specific packets. The algorithm should be capable of modelling the traffic on a particular environment based on the specific traffic patterns of the network, not yet completely attainable through the state-of-the-art works, thus providing expanded testing environments for next-generation networking technologies.

To this day, several techniques have been suggested and investigated in relation to network traffic sources. The most powerful and hence most developed frameworks in this domain and in the area of machine learning are the Generative Adversarial Networks (GANs), which have been shown to outperform other competing techniques. Overall, GANs are a popular choice for generating synthetic network traffic data due to their ability to generate realistic data, their adversarial training framework, their flexibility, and their ability to scale to large datasets. GANs are a type of unsupervised learning algorithm that do not require labelled training data. Instead, GANs use a two-part model, consisting of a generator and a discriminator, to learn the distribution of the data and generate new samples that are similar to a given training dataset. Given a training set, this technique learns to generate new data with the same statistics as the training set. For example, a GAN trained on photographs can generate new photographs that look at least superficially authentic to human observers, having many realistic characteristics.

However, GANs can also be integrated with supervised learning algorithms. In this case, the generative model would generate new samples, the discriminative model would evaluate the generated samples and try to distinguish them from the real ones, while the supervised learning algorithm would use the labels to learn to classify the generated samples. The two models are trained together in competition, with the generative model trying to produce samples that are indistinguishable from the real ones and the discriminative model trying to accurately identify the fake samples. Both networks are then trained in an adversarial manner in which the generator and discriminator compete against each other, with the generator network attempting to generate synthetic data that is indistinguishable from real data and the discriminator network attempting to correctly classify the synthetic data as synthetic until the discriminator can no longer distinguish between genuine and created data, indicating that the generator model can provide realistic results. Consequently, this can be useful for improving the performance of the supervised learning algorithm by providing it with additional training data.

Hui et al [1] discloses the generation of loT traffic using an enhanced GAN and a time series algorithm, LSTM, meant to capture the temporal correlation in the traffic series. Time series algorithms are a set of techniques that are used to analyse and model time-dependent data. These algorithms are commonly used to forecast future values of a time series based on its past behaviour, and as such, they can be useful in the generation of synthetic time series data with statistical properties similar to real-world time series data. With this goal of generating synthetic traffic data that accurately reflects the patterns and trends present in the original data, there have been some works that have studied time dependencies in data generation.

In the field of recurrent neural networks, often known as RNNs, the long short-term memory (LSTM) generators are a type of recurrent neural network that are typically utilised for the modelling and prediction of time series. During the process of making a prediction, self-attention is a method that enables a neural network to attend to many parts of its input simultaneously. It can be used to improve the performance of a variety of neural networks, including RNNs like LSTMs, by allowing the network to weight the value of various input features when generating a prediction. This allows the network to better understand the data it is being fed. In the context of [1], by using a series of gates that control the flow of information through the network, it was possible to effectively capture both the long-term and short-term dependencies in data and, furthermore, able to outperform previous models.

A LSTM cell is a subtype of recurrent neural network (RNN) that processes sequential data and learns its patterns. LSTM cells are particularly advantageous for tasks that require the model to remember information over an extended period of time. Each cell has three primary components: an input gate, an output gate, and a forget gate. Each of these gates is a sigmoid neural network layer that outputs a value between 0 and 1 based on the current input data and the previous hidden state of the LSTM cell. The gates are designed to regulate the information flow into and out of the cell. The input gate controls LSTM cell input. When the input gate is open (sigmoid output is close to 1), fresh information can flow into the cell and be added to its internal state. When the input gate is closed (sigmoid output near 0), new information cannot enter the cell. The forget gate controls LSTM cell output. When the forget gate is open, information is deleted from the cell's internal state. When the forget gate is closed, information cannot be forgotten. Output gate controls information flow from LSTM cell to output. When the output gate is open, information flows from the cell's internal state to the output. When the output gate is closed, information from the cell's internal state cannot flow to the output. This way, the input, forget, and output gates allow the LSTM cell to learn and retain patterns in input data over time.

In [1], a long-short-term memory (LSTM) generator equipped with a self-attention mechanism is adopted to capture the temporal correlation in traffic series so as to generate Internet of Things (loT) traffic, which is considered to be a special case of time series generation, influenced by the presence of complex background information on the devices. During the construction of the GAN framework, the generator G is composed of three sub-generators: a category generator G^{C}, a series length generator G^{M}, and a traffic series generator G^{T}. The complexity of this generator G is an important disadvantage.

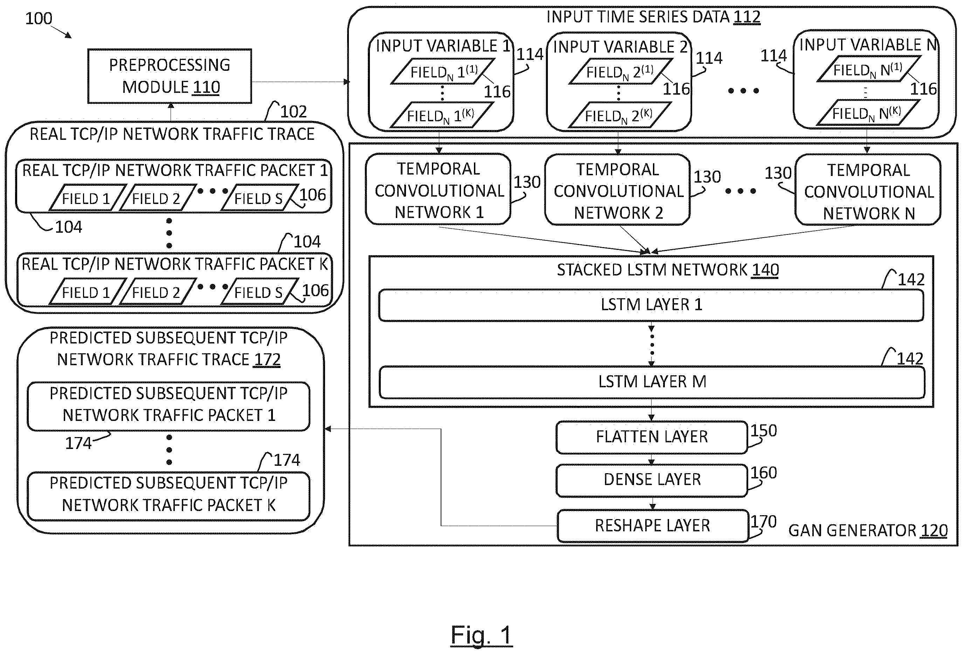

A further drawback of the model disclosed in [1] is that it can only be applied to the generation of loT traffic, it is not applicable to TCP/IP network traffic generation. The reason for this limitation lies in the distinct protocols used in loT packets compared to the protocols used in typical internet traffic (TCP/IP). In [1], due to the uniqueness of loT traffic, even the characteristics of each loT hardware component need to be learned and possess their own generator within the architecture. The model is described as leveraging knowledge graphs (Figure 1(b) of [1], loT knowledge graph for input of the model) that contain hardware-specific information relevant to the loT domain. This data is critical for capturing the characteristics and behaviour of loT devices, as different types of hardware may have different effects on the generated traffic. However, in TCP/IP network traffic the type of hardware used has no effect on the type of packets generated.

The present invention presents a solution to the aforementioned drawbacks, allowing the generation of realistic synthetic network traffic data based on TCP/IP protocol. In addition, the invention also allows accurately reconstructing an input series data and reproducing the observed sequential patterns and dependencies.

### References

[1] S. Hui, H. Wang, Z. Wang, et al. n.d. "Knowledge enhanced GAN for loT traffic generation". Proceedings of the ACM Web Conference 2022. NY, USA.

### SUMMARY

The invention relates to an artificial intelligence system for generating realistic synthetic TCP/IP network traffic data. The system can receive real-world network traffic and, from this input, generate similar packet types, with slight but realistic variations.

The system generates time-dependent synthetic traffic data specific to a network by using an LSTM network as the main generator network in a GAN. This way, by decreasing the difference between the synthetic data and the real-world data, the LSTM network may be trained to create synthetic network traffic data that is comparable to real-world data. The invention captures the relevant features and patterns unique to the TCP/IP protocol specific data.

The artificial intelligence system comprises a preprocessing module and a GAN. The preprocessing module is configured to receive a real TCP/IP network traffic trace including a plurality of sequential real TCP/IP network traffic packets and obtain, by normalizing the values of a plurality of predetermined fields of the received real TCP/IP network traffic packets, input time series data comprising a plurality of input variables. Each input variable corresponds to a different field of the received real TCP/IP network traffic packets.

The GAN includes a GAN generator and a GAN discriminator. The GAN generator is configured to receive the plurality of input variables and generate a plurality of predicted subsequent TCP/IP network traffic packets. The GAN generator comprises an individual Temporal Convolutional Network, TCN, for each input variable. TCNs efficiently extract and represent local temporal patterns within sequential data. Dilated convolutions are employed, enabling an exponential expansion of the receptive field while maintaining the computational efficiency of conventional convolutions. Through the implementation of distinct TCN layers for every variable, the generator can extract localized patterns that are unique to each individual variable.

The GAN generator also comprises a stacked LSTM network comprising a plurality of stacked LSTM layers, each LSTM layer having a plurality of LSTM cells. The stacked LSTM network is configured to receive a combined representation of the outputs of the individual TCNs to capture correlations between the input variables. A concatenation process involves merging the outputs of the distinct TCN layers to form a unified representation of the variables. The process of consolidating the data collected by the TCNs pertaining to each variable into a unified representation is undertaken in a manner that retains the distinctive attributes of each variable. Subsequently, the combined representation is transmitted to the first LSTM layer. LSTM layers can capture both temporal dependencies and long-term dependencies in time series data. Through the incorporation of LSTM layers, the generator is capable of acquiring knowledge pertaining to the interrelatedness and interdependence among the variables, thereby enabling it to simulate the patterns and associations inherent in the temporal data.

The GAN generator further comprises a flatten layer, a dense layer and a reshape layer for outputting the predicted subsequent TCP/IP network traffic packets at a predetermined dimensionality.

This particular hybrid structure allows the identification and analysis of both local and global patterns. TCN layers in the hybrid structure perform well at capturing local patterns that are specific to individual variables, allowing the generator to focus on learning patterns unique to each variable which is especially useful when the variables exhibit distinct characteristics or patterns. The LSTM layers in the hybrid structure is essential for capturing correlations between variables while accounting for their temporal dependencies. By modelling the complex relationships and interactions between the variables, the generator can generate outputs that incorporate the observed correlations in the training data. This improves the coherence and realism of the generated time series data.

Overall, the hybrid structure leverages TCN and LSTM strengths to capture local and global patterns, variable-specific characteristics, and variable-to-variable correlations. This combination provides a more powerful and expressive model for time series prediction tasks when compared to simpler structures that may not fully exploit these capabilities.

The artificial intelligence system enhances the accuracy of predictions for subsequent instances of the data (TCP/IP packets), given that the data in question is time-dependent. For better results, the model is also trained with this objective in mind, which deviates from the typical training process of a generic GAN. The standard GAN training technique is comprised of three major phases: firstly, random noise is generated and fed into the generator network, which produces synthetic data samples; secondly, a discriminator network is trained using a combination of real and synthetically generated data samples, the discriminator's goal being to accurately discriminate between actual and produced samples; finally, the generator is trained to deceive the discriminator by producing synthetic samples that become increasingly similar to genuine data. This repetitive training procedure is repeated until an equilibrium is established, at which point the generator generates high-quality synthetic data that can fool the discriminator.

The present invention also refers to a computer-implemented method and a computer program product for training the artificial intelligence system. The training method comprises sequentially receiving, by the preprocessing module, a plurality of sequential real TCP/IP network traffic traces, each trace comprising a plurality of sequential real TCP/IP network traffic packets; generating, by the GAN generator, a plurality of predicted subsequent TCP/IP network traffic packets for each trace *i*; comparing, by the GAN discriminator, the predicted subsequent TCP/IP network traffic packets for each trace i with the real TCP/IP network traffic packets of the subsequent trace i +1; and classifying, by the GAN discriminator, the predicted subsequent TCP/IP network traffic packets for each trace i as fake or real, and calculating a loss; and training the GAN generator using the loss.

The new approach for training the generator with series data deviates from the normal GAN training procedure in some aspects. Firstly, the generator of the present invention is trained using series data as opposed to random noise as input. This modification allows the generator to learn and capture the temporal dependencies and patterns present in the input data. Secondly, the generator's goal is not limited to the generation of new samples. Rather, it aims to reconstruct the input series data accurately, thereby reproducing the observed sequential patterns and dependencies. The discriminator's role remains the same, but it serves as a critic to guide the generator's learning and ensuring that the created data is realistic and mimics the true data distribution. The quality of the generated data is compared to the real follow-up data using metrics such as mean squared error or other similarity measurements to evaluate the generator's performance.

This strategy has various potential benefits. The generator can capture complicated temporal connections and produce follow-up data that preserves the sequential patterns found in the actual data by training it with series data, which can then improve follow-up data quality. Reconstruction-based learning assists the discriminator in the training phase guaranteeing that the produced data is representative of the true data distribution. Furthermore, the reconstruction quality rating offers a better measurement of how effectively the generator retains the data's temporal features by directly comparing the quality of the generated data with the real follow-up data.

Advantageously, the generator not only generates new realistic samples, but also can reconstruct the input series data reproducing the observed sequential patterns and dependencies. The generated network traffic data can be used to improve the accuracy and robustness of a variety of classifiers, including those based on deep learning and machine learning models. By training a deep neural network with the augmented dataset, it is possible to accurately identify various forms of network traffic, such as web browsing, video streaming, and file transfer, thereby enabling more precise traffic analysis and control. Based on the generator's output, it is then feasible to train many classifiers with an augmented dataset.

This way, the present invention also refers to a system, a computer-implemented method and a computer program product for training a TCP/IP network traffic data classifier with an extended training dataset. The system comprises the aforementioned artificial intelligence system, configured to receive a training dataset comprising a plurality of real TCP/IP network traffic traces and generate a plurality of predicted subsequent TCP/IP network traffic traces; a data processing module configured to obtain an extended training dataset by extending the training dataset with the predicted subsequent TCP/IP network traffic traces; and a training module configured to train a TCP/IP network traffic data classifier using the extended training dataset. Training the TCP/IP network traffic data classifier with more training samples (using the additional synthetic training samples generated by the GAN) increases the performance of the classifier.

The GAN's ability to not only generate new realistic samples but also reconstruct input series data with observed sequential patterns and dependencies can be useful in generating synthetic data for testing and evaluation purposes. The reconstructed data may be used to replicate real-world traffic circumstances, allowing researchers, developers, or network administrators to test the performance of various systems or algorithms. Additionally, the generated traffic data may be used to imitate network traffic in controlled conditions. This can be beneficial for network design, load testing, performance assessment, and evaluating the durability of network infrastructure under various traffic loads.

### BRIEF DESCRIPTION OF THE DRAWINGS

A series of drawings which aid in better understanding the invention and which are expressly related with an embodiment of said invention, presented as a non-limiting example thereof, are very briefly described below.
Figure 1 shows an artificial intelligence system for generating realistic synthetic TCP/IP network traffic data according to an embodiment.
Figure 2 illustrates the training of the GAN using real TCP/IP network traffic data instead of noise.
Figure 3 is a flow diagram of a computer-implemented method of training the artificial intelligence system.
Figure 4A depicts a particular embodiment of the GAN generator. Figure 4B shows the internal structure of a LSTM layer of the stacked LSTM network. Figure 4C represents an exemplary internal structure of a LSTM cell.
Figure 5 shows an exemplary input time series data in a table format.
Figure 6 shows the data dimensions of the outputs of each layer of the GAN generator.
Figure 7 illustrates a computer-implemented method of training a TCP/IP network traffic data classifier.
Figure 8 represents a system for training a TCP/IP network traffic data classifier according to an embodiment.
Figure 9 depicts a TCP/IP receiver that acquires the real TCP/IP network traffic traces directly from a network.

### DETAILED DESCRIPTION

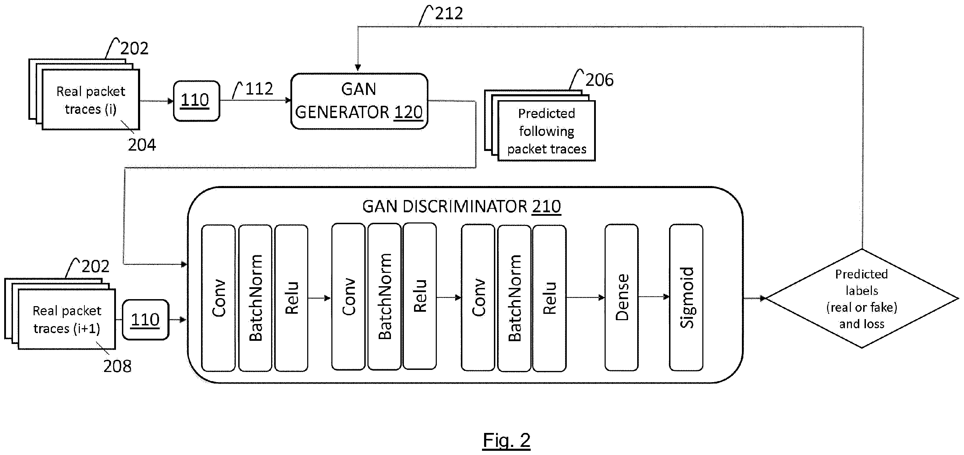

**Figure** 1 represents an artificial intelligence system 100 for generating realistic synthetic TCP/IP network traffic data. The artificial intelligence system 100 comprises a preprocessing module 110 and a Generative Adversarial Network, GAN, including a GAN generator 120 and a GAN discriminator 210 (depicted in Figure 2).

The preprocessing module 110 is configured to receive real TCP/IP network traffic data, in particular at least one real TCP/IP network traffic trace 102, each trace 102 including a plurality K of sequential real TCP/IP network traffic packets 104. The preprocessing module 110 is further configured to normalize the values of a plurality N of predetermined fields 106 of the received real TCP/IP network traffic packets 104, among all the fields 106 (Field 1, Field 2, ..., Field S) included in said packets (with N≤S), and obtain input time series data 112 comprising a plurality N of input variables 114, wherein each input variable 114 corresponds to a different field 106 of the received real TCP/IP network traffic packets 104. Each input variable 114 includes K normalized fields 116 ("FIELD_{N} i^{(j)}" in Figure 1 representing the normalized value of field i of packet j, with 1≤ i ≤N and 1≤ j ≤K) of the corresponding field of all the K real TCP/IP network traffic packets 104, in the same order as the real TCP/IP network traffic packets 104 were received.

The GAN generator 120 is configured to receive the plurality N of input variables 114 and generate a predicted subsequent TCP/IP network traffic trace 172 including a plurality of predicted subsequent TCP/IP network traffic packets 174. In particular, the GAN generator 120 comprises an individual Temporal Convolutional Network, TCN 130, for each input variable 114 (each input variable 114 has its own TCN 130, so that they are independent from one another), and a stacked LSTM network 140 comprising a plurality of stacked LSTM layers 142, each LSTM layer 142 having a plurality of LSTM cells, the stacked LSTM network being configured to receive a combined representation of the outputs of the individual TCNs 130 to capture correlations between the input variables 114. The GAN generator 120 further comprises a flatten layer 150, a dense layer 160 and a reshape layer 170 for outputting the predicted subsequent TCP/IP network traffic packets 174 at a predetermined dimensionality. Since the GAN generator 120 tries to generate network traffic data similar to the input, its output should be provided with the same shape as the given input, which can be achieved with the reshape layer 170.

In an embodiment, the input variables 114 include protocol information fields of the received real TCP/IP network traffic packets 104. The input variables 114 may include at least one of the following fields of the received TCP/IP network traffic packets 114: frame time, frame length, TCP protocol, UDP protocol, ARP protocol, ICMP protocol, UDP length, TCP length, TCP flags.

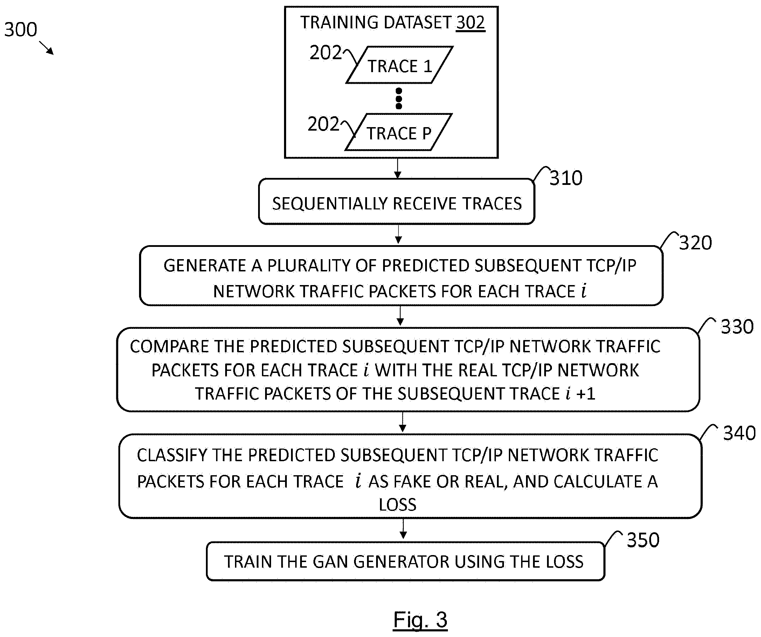

**Figure** 2 depicts, according to an embodiment, the training of the GAN generator 120 and GAN discriminator 210 with a training dataset 302 (shown in Figure 3) comprising a plurality P of sequential real TCP/IP network traffic traces 202, each trace 202 comprising a plurality of sequential real TCP/IP network traffic packets 104. The preprocessing module 110 is configured to sequentially receive the plurality of sequential real TCP/IP network traffic traces 202 (trace 1, trace 2, ..., trace P) to obtain the input time series data 112 with the input variables 114. The GAN generator 120 is configured to generate a plurality of predicted subsequent TCP/IP network traffic packets 174 for each trace i 204, obtaining a plurality of predicted subsequent TCP/IP network traffic traces 206. The output of the GAN generator 120 matches the format of the real TCP/IP network traffic traces 202 used to train the model, as they will later act as input for the GAN discriminator 210.

The GAN discriminator 210 is configured to compare the predicted subsequent TCP/IP network traffic packets 174 for each trace *i* 204 with the real TCP/IP network traffic packets 104 of the subsequent trace *i* +1 208 (conveniently preprocessed by the preprocessing unit 110 in a similar way as in the GAN generator input), classifying the predicted subsequent TCP/IP network traffic packets 174 for each trace i 204 as fake or real, and calculating a loss 212 that is used to train the GAN generator 120 according to any method of the prior art.

The GAN discriminator 210 has the same function as any other GAN discriminator of the prior art, namely trying to distinguish between real and synthetic data, and therefore any GAN discriminator 210 may be employed. With that purpose in mind, the GAN discriminator 210 needs to receive both fake or synthetic (i.e. predicted subsequent TCP/IP network traffic traces 206) and real TCP/IP network traffic traces 202. The GAN discriminator 210 used in the artificial intelligence system 100 may have any internal structure according to the prior art. For instance, in the embodiment depicted in Figure 2, predicted trace 206 and real trace *i*+1 208 pass through a network of convolutional blocks, followed by batch-normalization and ReLU activation functions, in order to learn the appropriate data characteristics needed for classification. A global average pooling layer (not shown in Figure 2) may be applied, the result of which is then sent to a dense layer with the sigmoid activation function. This function will return a scalar value between 0 and 1 for the sequence, indicating whether the predicted trace 206 is authentic or not. A loss is also computed and used to train the GAN generator 120. As previously indicated, the GAN discriminator 210 may have any other structure and different layers.

**Figure 3** depicts a flow diagram of a computer-implemented method 300 of training the artificial intelligence system 100. The training method 300 comprises the following steps:
- Sequentially receiving 310, by the preprocessing module 110, a plurality of sequential real TCP/IP network traffic traces 202, each trace 202 comprising a plurality of sequential real TCP/IP network traffic packets 104.
- Generating 320, by the GAN generator 120, a plurality of predicted subsequent TCP/IP network traffic packets 174 for each trace i 204.
- Comparing 330, by the GAN discriminator 210, the predicted subsequent TCP/IP network traffic packets 174 for each trace *i* 204 with the real TCP/IP network traffic packets 104 of the subsequent trace *i* +*1*.
- Classifying 340, by the GAN discriminator 210, the predicted subsequent TCP/IP network traffic packets 174 for each trace i as fake or real, and calculating a loss 212.
- Training 350 the GAN generator 120 using the loss 212.

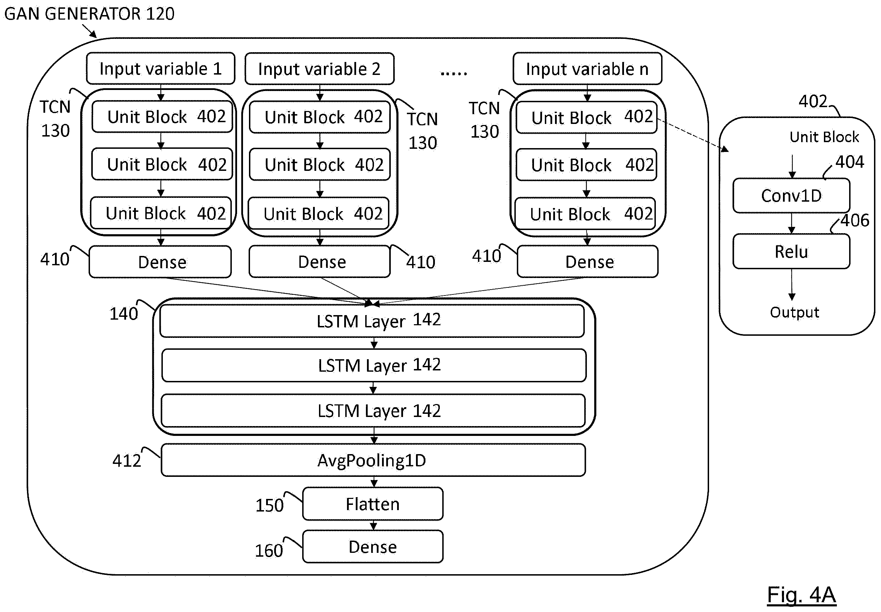

A particular embodiment of the GAN generator 120 is depicted in **Figure 4A****.** In this embodiment the TCN 130 is formed by a plurality of unit blocks 402 (or TCN layers) connected in series, each unit block comprising a 1D convolutional layer 404 that uses a ReLU 406 as an activation function. During the training of the model, the packet information fields are received by the GAN generator 120 that will try to predict the next values of the input data (next packet information fields). To achieve this, the model needs to extract and represent local temporal patterns within the sequential data given as input. With that goal in mind, convolutions are used. The 1D convolutional layer 404 of each unit block 402 processes a 1-dimensional input as a sequence of values. Each 1D convolutional layer 404 is made up of a series of learnable filters that move across the input sequence, performing a convolution operation at each step. This operation entails multiplying the filter weights by the corresponding input values and adding them all together. The output indicates the presence of specific patterns or features in the input sequence.

The GAN generator 120 can learn to capture local patterns in the data, such as short-term dependencies or local structures, by using 1D convolutions. The 1D convolution layer 404 employs a ReLU 406 as an activation function to introduce non-linearity into the network, allowing it to learn complex mappings between input data and generated output. ReLU operates on the output of each neuron in the convolutional layer element by element, setting any negative input values to zero while preserving positive values, thereby reducing the possibility of vanishing gradients.

Through the implementation of distinct TCN layers for every input variable 114, the generator is able to concentrate on extracting localised patterns that are unique to each individual variable. In the embodiment, the GAN generator 120 includes a dense layer 410 at the output of each individual TCN 130 to combine and weigh the features learned from the convolutional layers.

Subsequently, the combined representation of the outputs of the TCN layers is transmitted to the stacked LSTM network 140, which in this embodiment comprises three LSTM layers that capture both temporal dependencies and long-term dependencies in time series data. The outputs of the TCN layers (in this embodiment, the outputs of the dense layers 410) are concatenated into a matrix. For example, if there are 14 individual TCN 130 and the output of each individual TCN is 1xN, then the combined representation of the outputs of the TCN layers would be 14xN.

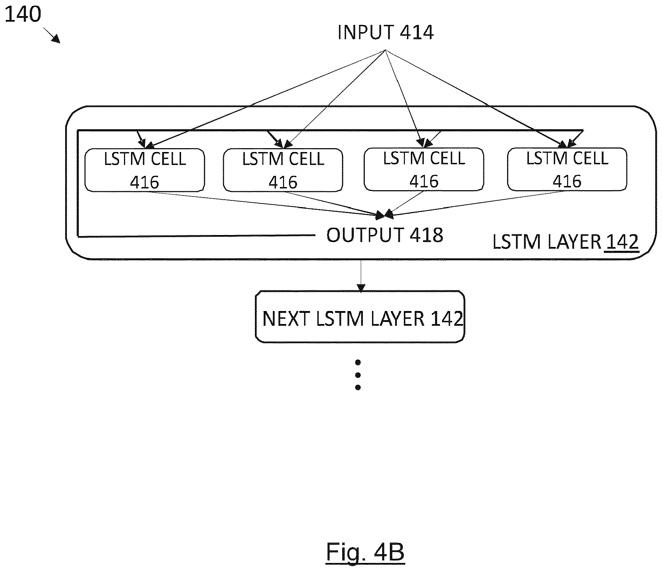

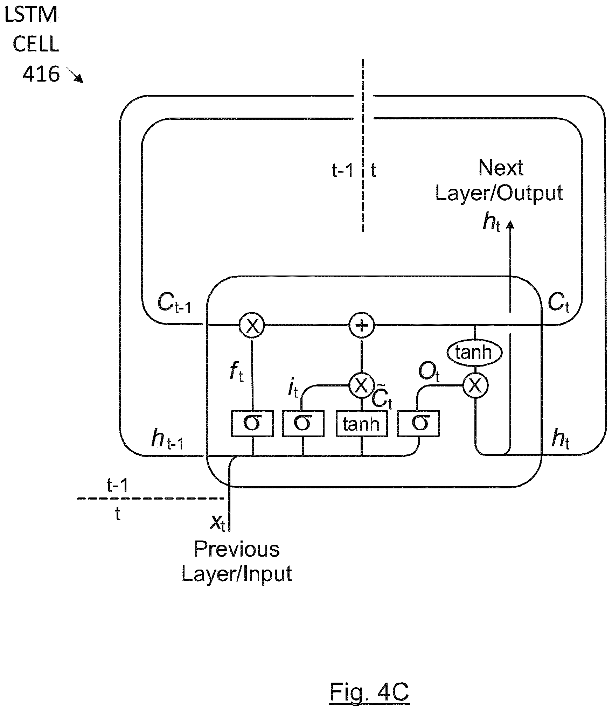

The purpose of using multiple LSTM layers 142 is to enable the GAN generator 230 to learn complicated patterns and dependencies in the input sequence. Each LSTM layer's output is passed on to the next, allowing the model to capture ever higher-level representations of the input data. **Figure 4B** shows the internal structure of one of the LSTM layers 142 of the LSTM network 140, and the interconnection between subsequent LSTM layers 142. In this example the LSTM layer 142 comprises four LSTM cells 416, although each LSTM layer 142 may include a different number of LSTM cells 416. The LSTM cells 416 used in the LSTM layer 142 may be any LSTM cell known in the prior art, such as the one depicted in **Figure 4C****.** The LSTM layers 142 are stacked in series, wherein the output 418 (output vector *hₜ* of each LSTM cell 416) of a LSTM layer 142 is used as input 414 (input vector *xₜ* to each LSTM cell 416) to the next LSTM layer. The output vector *hₜ* and cell state vector *cₜ* at iteration *t* of the LSTM cells 416 of a LSTM layer 142 also feeds the LSTM cells 416 of said LSTM layer 142 to obtain the output *h*_{*t*+1} for the next iteration *t* + 1. The input 414 of the first LSTM layer 412 is the combined representation of the outputs of the dense layers 410.

In this embodiment the following layer is an average pooling 1D layer 412 that decreases the spatial dimensionality of the input sequence. The input sequence is divided into nonoverlapping segments, and the average value inside each segment is computed, thus decreasing the amount of network parameters and providing a form of spatial downsampling. Average pooling aids in extracting the most important information from a sequence while lowering spatial dimensionality. It can also aid with resistance to minor local variances.

The flatten layer 150 reshapes the previous layer's multidimensional output into a single one-dimensional long vector, enabling the following dense layer 160 to process data from the full sequence as a single input. The dense layer 160, also known as a fully-connected layer, is a conventional neural network layer in which each neuron is coupled to every neuron in the preceding layer. The dense layer 160 of the GAN generator 120 is responsible for learning the complex mappings between the flattened input representation and the final generated output. It takes the flattened vector as input and produces the final output using a set of learnable weights and biases. The activation function of the dense layer 160 is dependent on the range of the input; since the desired range of the output is the same as input, i.e. [0, 1], the activation function is preferably the sigmoid function.

Each real TCP/IP network traffic packet 104 (Packet 1, ..., Packet K) contains multiple fields 106 (Field 1, ..., Field S), from which only certain fields (Field 1, ..., Field N) are selected by the preprocessing module 110 as being representative of the whole packet (input variables 114). Each different input variable 114 correspond to a different field of the packet. In an embodiment, the input variables 114 are the following 14 protocol fields in the real packets:
- frame.time_delta: indicates the time between the current packet and the previous packet (continuous variable).
- frame.len: indicates the length of the packet in bytes (continuous variable).
- frame.protocols_tcp: indicates if the packet is a TCP packet (binary variable).
- frame.protocols_udp: indicates if the packet is a UDP packet (binary variable).
- frame.protocols_arp: indicates if the packet is an ARP packet (binary variable).
- frame.protocols_icmp: indicates if the packet is an ICMP packet (binary variable).
- udp.length: indicates the length of the UDP packet in bytes (continuous variable).
- tcp.len: indicates the length of the TCP packet in bytes (continuous variable).
- tcp.flags.ack: indicates if the packet is an acknowledgement packet (binary variable).
- tcp.flags.push: indicates if the packet is a push packet (binary variable).
- tcp.flags.reset: indicates if the packet is a reset packet (binary variable).
- tcp.flags.syn: indicates if the packet is a SYN packet (binary variable).
- tcp.flags.fin: indicates if the packet is a FIN packet (binary variable).
- 'egr_reg': indicates whether the packet is going uplink or downlink a connection (binary variable).

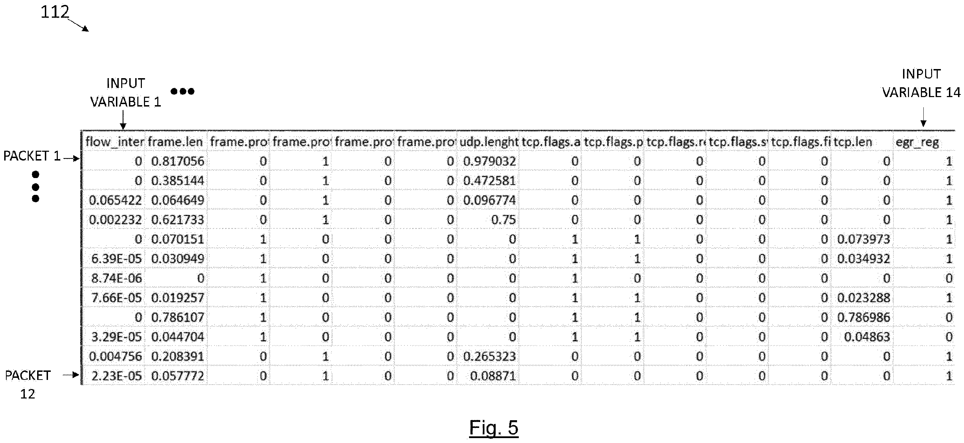

These 14 selected fields are then preprocessed before serving as input to the GAN generator 120 (input time series data 112) by transforming the continuous variables into values between [0, 1] and the binary values to either be 0 or 1 for each packet. **Figure 5** shows an exemplary input time series data 112 in a table format, wherein each column (input variable 114) corresponds to a different field of the 14 selected fields and each row represents a different packet (in the example, K=12, i.e. the real TCP/IP network traffic trace 102 comprises 12 packets). For the continuous values, the min-max normalization may be used in order to get corresponding values between 0 and 1, as machine learning models require input values within the range of [-1, 1]. Binary values, such as flags (for example, the tcp flags fields) are already either 0 or 1. Regarding the possible protocols, a different binary variable is used per protocol (tcp/udp/arp...). The GAN generator 120 is fed with this input time series data 112.

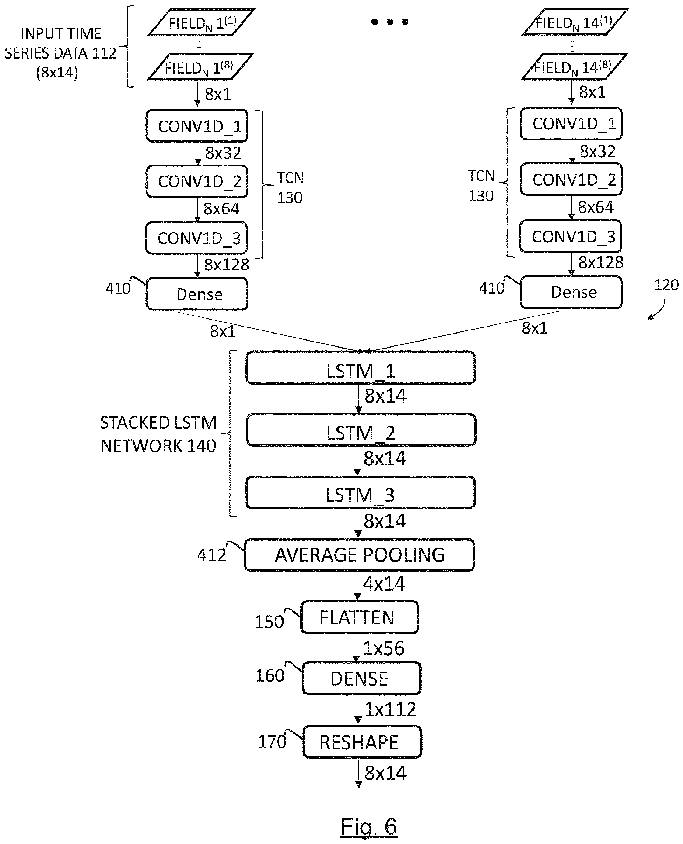

**Figure 6** shows the different changes of data dimensions throughout the different layers of the GAN generator 120, according to an embodiment. In this example the input time series data 112 comprises 8 data packets and 14 input variables (size 8x14). Each individual TCN 130 includes three 1D convolutional layers 404 (CONV1 D_1, CONV1D_2, CONV1D_3), with 32, 64 and 128 filters, respectively, and each having the following parameters: kernel size=3, stride=2, padding=same, activation function=ReLU. The stacked LSTM network 140 comprises three stacked LSTM layers 142 (LSTM_1, LSTM_2, LSTM_3), the output size of each layer being 8x14. The average pooling 1D layer 412 reduces the output size down to 4x14. The flatten layer 150 reduces the size of the matrix 4x14 to a vector 1x56. The size of the output of the dense layer 160 is 1x112. The reshape layer 170 finally returns the output size to the same dimension of the input time series data, 8x14.

The network traffic data generated by the artificial intelligence system 100 can be used to improve the accuracy and robustness of all types of classifiers that classify TCP/IP network traffic data. These classifiers can serve several different objectives, such as:
- Protocol classifiers: trained to classify network traffic based on the used protocol, such as TCP, UDP, ICMP, HTTP, and FTP.
- Intrusion detection/prevention classifiers: trained to identify various types of network attacks or malicious activities, including DoS attacks, dDoS attacks, port scanning, SQL injection, XSS attacks, and others.
- Application classifiers: trained to classify network traffic based on the application or service being used, such as web browsing, email, video streaming, file sharing, VoIP, online gaming, and more.
- Quality of Service (QoS) classifiers: trained to differentiate network traffic based on QoS requirements, distinguishing between real-time traffic (voice or video) and best-effort traffic (web browsing or file downloads), for example.
- Traffic anomaly detection classifiers: trained to identify abnormal network traffic patterns that deviate from regular behavior, which can indicate potential security threats or network performance issues.
- Traffic engineering classifiers: trained to classify traffic based on its source, destination, or other parameters to assist in traffic engineering tasks. For instance, traffic can be classified based on the geographical location of the endpoints, allowing network operators to optimize routing and resource allocation strategies for different regions or to identify traffic patterns that require specific network infrastructure improvements.

All these different classifiers may be referred to as TCP/IP network traffic data classifiers, since all of them analyze and classify TCP/IP network traffic data. The accuracy and robustness of these classifiers can be improved by training these classifiers with an augmented training dataset. The most typical approach to handle this unbalanced situation is undersampling or oversampling the dataset

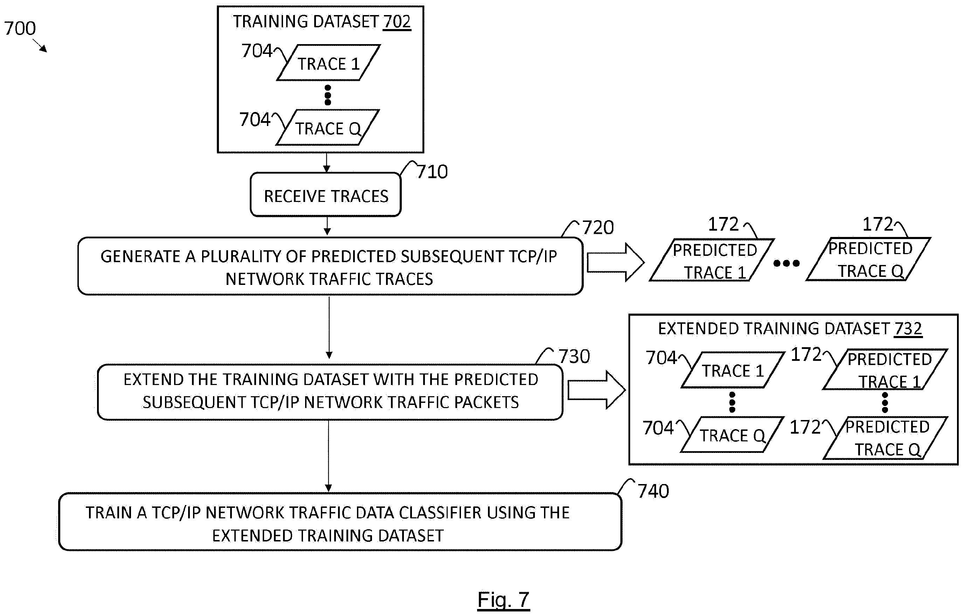

**Figure 7** represents an embodiment of a computer-implemented method 700 of training a TCP/IP network traffic data classifier with an extended training dataset using the artificial intelligence system 100. The method 700 comprises receiving 710, by the preprocessing module 110, a training dataset 702 comprising a plurality of real TCP/IP network traffic traces 704 (trace 1, ..., trace Q); generating 720, by the GAN generator 120, a predicted subsequent TCP/IP network traffic trace 172 (predicted trace 1, ..., predicted trace Q) for each trace 704 of the training dataset 702; extending 730 the training dataset 102 with the predicted subsequent TCP/IP network traffic traces 172; and training 740 a TCP/IP network traffic data classifier 830 using the extended training dataset 732. In an embodiment, noise input could also be used to train the GAN generator 120 so as to obtain a large extended training dataset 732 thought noise input to train the classifier.

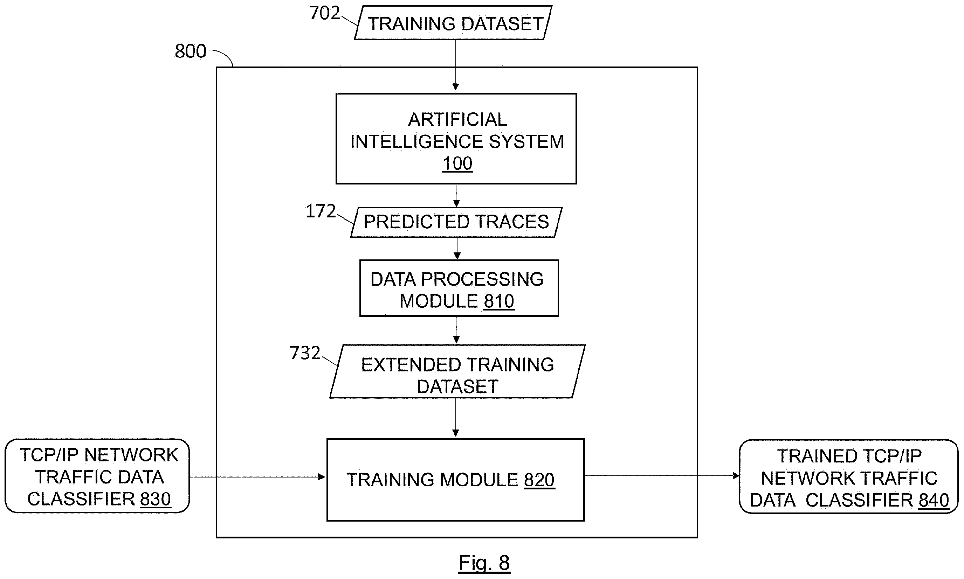

**Figure 8** illustrates a system 800 for training a TCP/IP network traffic data classifier with an extended training dataset according to an embodiment. The system 800 comprises the artificial intelligence system 100 previously described, configured to receive a training dataset 702 comprising a plurality of real TCP/IP network traffic traces 704 and generate a plurality of predicted subsequent TCP/IP network traffic traces 172.

The system 800 also comprises a data processing module 810 configured to obtain an extended training dataset 732 by extending the training dataset 102 with the predicted subsequent TCP/IP network traffic traces 172; and a training module 820 configured to train a TCP/IP network traffic data classifier 830 using the extended training dataset 732. The training module 520 can be any unit or device (e.g. a processor) programmed to perform any conventional training algorithm already known in the art to train any kind of TCP/IP network traffic data classifier. The elements of the system 800 (artificial intelligence system 100, data processing module 810 and training module 820) may be implemented, for instance, in a processor. In another embodiment, the training module 820 is implemented in a different processor or distributed among different processors, as is common in multi-GPU training for large neural-network architectures. By using an augmented training dataset, the performance of the trained TCP/IP network traffic data classifier 840 thus obtained is improved.

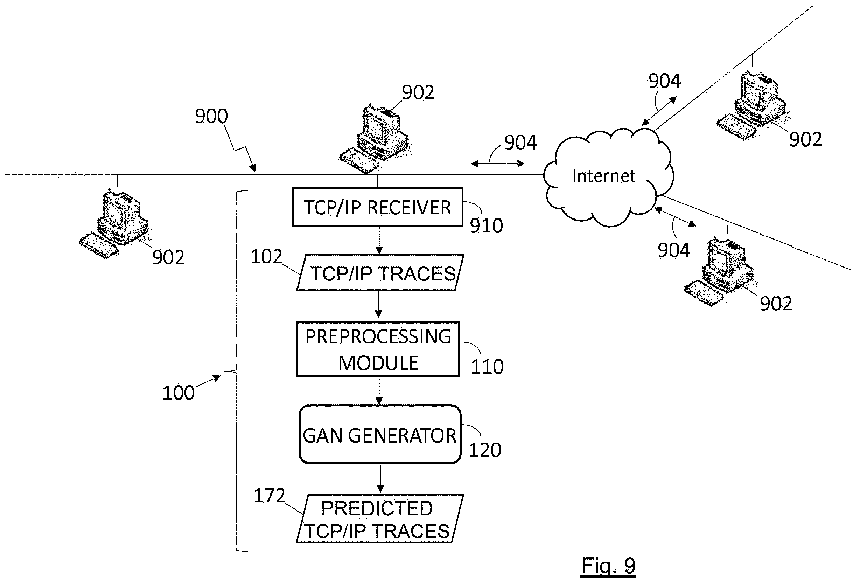

The data packets of the real TCP/IP network traffic trace 102 of Figure 1 or the sequential real TCP/IP network traffic traces 202 of Figure 2, may be obtained from captures of traffic in a real network, using for instance a computer of the network. As shown in the embodiment of **Figure 9****,** the artificial intelligence system 100 may include a TCP/IP receiver 910 configured to acquire one or more real TCP/IP network traffic traces 102 from an IP network 900 comprising a group of devices, such as computers 902, connected via their unique internet protocol (IP) addresses and communicating using the TCP/IP protocol by wire and/or wirelessly. Network traffic data 904 is transmitted between the computers 902 of the IP network 900, and the TCP/IP receiver 910 captures one or more real TCP/IP network traffic traces 102. The acquired data is then transmitted to the preprocessing module 110 for preprocessing. The GAN generator 120 then generates the predicted subsequent TCP/IP network traffic traces 102.

## Claims

1. An artificial intelligence system for generating realistic synthetic TCP/IP network traffic data, the artificial intelligence system (100) comprising:
- a preprocessing module (110) configured to:
receive a real TCP/IP network traffic trace (102) including a plurality of sequential real TCP/IP network traffic packets (104); and
obtain, by normalizing the values of a plurality of predetermined fields (106) of the received real TCP/IP network traffic packets (104), input time series data (112) comprising a plurality of input variables (114), wherein each input variable (114) corresponds to a different field (106) of the received real TCP/IP network traffic packets (104); and
- a Generative Adversarial Network, GAN, including a GAN generator (120) and a GAN discriminator (210), the GAN generator (120) being configured to receive the plurality of input variables (114) and generate a plurality of predicted subsequent TCP/IP network traffic packets (174), wherein the GAN generator (120) comprises:
an individual Temporal Convolutional Network, TCN (130), for each input variable (114);
a stacked LSTM network (140) comprising a plurality of stacked LSTM layers (142), each LSTM layer (142) having a plurality of LSTM cells, the stacked LSTM network (140) being configured to receive a combined representation of the outputs of the individual TCNs (130) to capture correlations between the input variables;
a flatten layer (150);
a dense layer (160); and
a reshape layer (170) for outputting the predicted subsequent TCP/IP network traffic packets (174) at a predetermined dimensionality.

2. The system of claim 1, wherein the input variables (114) include protocol information fields of the received real TCP/IP network traffic packets (104).

3. The system of claim 2, wherein the input variables (114) include at least one of the following fields of the received real TCP/IP network traffic packets (104): frame time, frame length, IP protocol, iPv6 protocol, ARP protocol, TCP protocol, UDP protocol, IP flags, UDP length, TCP flags.

4. The system of any of previous claims, wherein the GAN generator (120) and GAN discriminator (210) are trained with a plurality of sequential real TCP/IP network traffic traces (202), each trace (202) comprising a plurality of sequential real TCP/IP network traffic packets (104);
wherein the preprocessing module (110) is configured to sequentially receive the plurality of real TCP/IP network traffic traces (202);
wherein the GAN generator (120) is configured to generate a plurality of predicted subsequent TCP/IP network traffic packets (174) for each trace i (204);; and
wherein the GAN discriminator (210) is configured to:
compare the predicted subsequent TCP/IP network traffic packets (174) for each trace i (204) with the real TCP/IP network traffic packets (104) of the subsequent trace i+1 (208); and
classify the predicted subsequent TCP/IP network traffic packets (174) for each trace i (204) as fake or real, and calculate a loss (212) used to train the GAN generator (120).

5. The system of any of previous claims, wherein each TCN (130) comprises a plurality of 1D convolutional layers (404).

6. The system of any of previous claims, further comprising a TCP/IP receiver (910) configured to acquire one or more real TCP/IP network traffic traces (102) from an IP network (900).

7. A computer-implemented method of training the artificial intelligence system of claim 1, the training method (300) comprising:
sequentially receiving (310), by the preprocessing module (110), a plurality of sequential real TCP/IP network traffic traces (202), each trace (202) comprising a plurality of sequential real TCP/IP network traffic packets (104);
generating (320), by the GAN generator (120), a plurality of predicted subsequent TCP/IP network traffic packets (174) for each trace *i* (204);
comparing (330), by the GAN discriminator (210), the predicted subsequent TCP/IP network traffic packets (174) for each trace *i* (204) with the real TCP/IP network traffic packets (104) of the subsequent trace *i*+1 (208);
classifying (340), by the GAN discriminator (210), the predicted subsequent TCP/IP network traffic packets (174) for each trace i (204) as fake or real, and calculating a loss (212); and
training (350) the GAN generator (120) using the loss (212).

8. A non-transitory computer-readable storage medium for training the artificial intelligence system of claim 1, comprising computer code instructions that, when executed by a processor, causes the processor to perform the method of claim 7.

9. A system for training a TCP/IP network traffic data classifier with an extended training dataset, the system (800) comprising:
- the artificial intelligence system (100) of claim 1 configured to receive a training dataset (702) comprising a plurality of real TCP/IP network traffic traces (704) and generate a plurality of predicted subsequent TCP/IP network traffic traces (172);
- a data processing module (810) configured to obtain an extended training dataset (732) by extending the training dataset (102) with the predicted subsequent TCP/IP network traffic traces (172); and
- a training module (820) configured to train a TCP/IP network traffic data classifier (830) using the extended training dataset (732).

10. A computer-implemented method of training a TCP/IP network traffic data classifier with an extended training dataset using the artificial intelligence system (100) of claim 1, the method (700) comprising:
- receiving (710) a training dataset (702) comprising a plurality of real TCP/IP network traffic traces (704);
- generating (720) a predicted subsequent TCP/IP network traffic trace (172) for each trace (704) of the training dataset (702);
- extending (730) the training dataset (102) with the predicted subsequent TCP/IP network traffic traces (172); and
- training (740) a TCP/IP network traffic data classifier (830) using the extended training dataset (732).

11. A non-transitory computer-readable storage medium for training a TCP/IP network traffic data classifier with an extended training dataset, comprising computer code instructions that, when executed by a processor, causes the processor to perform the method of claim 10.
